# EUROPÄISCHE PATENTANMELDUNG

(11) **EP 3 056 953 A1**
(43) Veröffentlichungstag der Anmeldung: **17.08.2016**
(21) Anmeldenummer: 15154671.0
(22) Anmeldetag: 11.02.2015
(51) Int. Cl.: G05B 19/042

(54) **Autarkes Feldgerät der Automatisierungstechnik zur Fernüberwachung**

(71) Anmelder: Siemens Aktiengesellschaft, 80333 München (DE)
(72) Erfinder: Menzel, Thomas, 91094 Langensendelbach OT Bräuningshof (DE)

(57) **Zusammenfassung**

Ein Feldgerät (9) der Automatisierungstechnik umfasst eine interne Sensorik (10), mittels derer Zustände erfasst werden, denen das Feldgerät (9) als Ganzes unterworfen ist. Es weist weiterhin Anschlüsse (14) auf, über die dem Feldgerät (9) von einer externen Sensorik (15) Sensorsignale zugeführt werden können. Weiterhin weist das Feldgerät (9) einen Kanal (16) zu einem seriellen Feldbus (8) und einen weiteren Kanal (18) auf. Das Feldgerät (9) weist einen Prozessor (19) auf, der ein in einem Programmspeicher (20) hinterlegtes Programm abarbeitet. Aufgrund der Abarbeitung des Programms nimmt der Prozessor (19) entsprechend dem Programm von der internen Sensorik (10) und/oder über die Anschlüsse (14) von der externen Sensorik (15) und/oder über den Kanal (16) zu dem Feldbus (8) über den Feldbus (8) übermittelte Signale entgegen. Er ermittelt anhand der entgegengenommenen Signale ein Auswertungsergebnis. Der Prozessor (19) übermittelt das Auswertungsergebnis über den weiteren Kanal (18) an eine übergeordnete Einrichtung (21). Soweit erforderlich, entscheidet der Prozessor (19) zuvor anhand des Auswertungsergebnisses, ob eine Übermittlung des Auswertungsergebnisses erforderlich ist.

## Beschreibung

Die vorliegende Erfindung geht aus von einem Feldgerät der Automatisierungstechnik.

Im Rahmen der Weiterentwicklung der Automatisierungstechnik nimmt die Überwachung von Prozessen aus der Ferne eine immer größere Bedeutung ein. Insbesondere soll eine durchgehende Überwachung einzelner Komponenten und Geräte im Feld erfolgen.

Zur Realisierung einer derartigen Überwachung sind verschiedene Vorgehensweisen bekannt. So ist es beispielsweise bekannt, die entsprechenden zu überwachenden Größen mittels entsprechender Sensoren zu erfassen und an ein Automatisierungsgerät oder dergleichen zu übermitteln. Diese Vorgehensweise führt zu einer erheblichen Belastung der Kommunikationsverbindung des Automatisierungsgeräts zum Prozess. Weiterhin verfügen in der Regel sowohl die Sensoren als auch die Automatisierungsgeräte nur über eine reduzierte Mächtigkeit, die im harten (steuernden) Echtzeitkontext oder mittels ihrer typischen Programmiersprachen wie beispielsweise AWL, ST oder HiGraph realisierbar ist. Anspruchsvolle technische Auswertungen wie beispielsweise eine Fourieranalyse oder produktionsplanbezogene Analysen sind damit nicht möglich.

Es ist zwar möglich, die mittels der Sensoren erfassten Daten von dem jeweiligen Automatisierungsgerät an eine übergeordnete Ebene - beispielsweise die Prozessleitebene - oder ein zusätzliches Automatisierungsgerät (Industrie-PC usw.) weiterzuleiten und dort diese Auswertungen vorzunehmen. Diese Vorgehensweise erfordert jedoch ein vollständiges Durchreichen der nicht vorverarbeiteten Daten vom jeweiligen Automatisierungsgerät an die übergeordnete Ebene und führt damit zu einer Belastung der Automatisierungsgeräte mit zusätzlicher Kommunikation zu der übergeordneten Ebene in erheblichem Umfang.

Theoretisch ist es weiterhin denkbar, auf der übergeordneten Ebene zusätzlich zur Schnittstelle zu den Automatisierungsgeräten eine weitere Schnittstelle zur direkten Überwachung des Prozesses zu implementieren. Diese Vorgehensweise führt jedoch zu einer erhöhten Komplexität.

Die Aufgabe der vorliegenden Erfindung besteht darin, Möglichkeiten zu schaffen, mittels derer auf einfache, kostengünstige und zuverlässige Weise eine effiziente Überwachung von Prozessen aus der Ferne möglich ist. Weiterhin soll es möglich sein, eine derartige Überwachung vorzunehmen, ohne in den echtzeitkritischen und/oder sicherheitskritischen Bereich der Steuerung einzugreifen. Es soll also ein offenes System geschaffen werden, das ohne Eingriff in die Steuerung Prozesssignale erfassen und weitergeben kann.

Die Aufgabe wird durch ein Feldgerät der Automatisierungstechnik mit den Merkmalen des Anspruchs 1 gelöst. Vorteilhafte Ausgestaltungen des Feldgeräts sind Gegenstand der abhängigen Ansprüche 2 bis 15.

Erfindungsgemäß wird ein Feldgerät der Automatisierungstechnik geschaffen,
- wobei das Feldgerät eine interne Sensorik umfasst, mittels derer Zustände erfasst werden, denen das Feldgerät als Ganzes unterworfen ist,
- wobei das Feldgerät Anschlüsse aufweist, über die dem Feldgerät von einer externen Sensorik Sensorsignale zugeführt werden können,
- wobei das Feldgerät einen Kanal zu einem seriellen Feldbus und einen weiteren, von dem Kanal zu dem seriellen Feldbus verschiedenen Kanal aufweist,
- wobei das Feldgerät einen Prozessor aufweist,
- wobei der Prozessor ein in einem Programmspeicher hinterlegtes Programm abarbeitet,
- wobei der Prozessor aufgrund der Abarbeitung des Programms entsprechend dem Programm
   -- von der internen Sensorik und/oder über die Anschlüsse von der externen Sensorik und/oder über den Kanal zu dem Feldbus über den Feldbus übermittelte Signale entgegennimmt,
   -- anhand der entgegengenommenen Signale ein Auswertungsergebnis ermittelt und
   -- entweder das Auswertungsergebnis stets über den weiteren Kanal an eine übergeordnete Einrichtung übermittelt oder anhand des Auswertungsergebnisses entscheidet, ob eine Übermittlung des Auswertungsergebnisses an die übergeordnete Einrichtung erforderlich ist, und das Auswertungsergebnis nur in diesem Fall an die übergeordnete Einrichtung übermittelt.

Die interne Sensorik kann nach Bedarf bestimmt sein. Beispielsweise kann die interne Sensorik einen Beschleunigungssensor, einen Schwingungssensor, einen Temperatursensor und/ oder einen Positionssensor umfassen. Der Positionssensor kann beispielsweise als GPS-Modul ausgebildet sein.

Die Anschlüsse können als Anschlüsse für Binärsignale ausgebildet sein. Alternativ oder zusätzlich können die Anschlüsse als Anschlüsse für Analogsignale ausgebildet sind. Im Falle von Anschlüssen für Analogsignale können die Analogsignale insbesondere als Stromsignale mit 4-20 mA ausgebildet sein.

Das Feldgerät ist in der Regel vorprogrammiert. Weder eine Programmierung noch eine sonstige Parametrierung und dergleichen durch den Endanwender sind in der Regel erforderlich. Es ist daher möglich, dass das Feldgerät kein Bedienfeld aufweist. Es ist jedoch alternativ ebenso möglich, dass das Feldgerät über einen Anschluss zum Anschließen eines Bedienfeldes verfügt. Ein derartiger Anschluss kann als leitungsgebundener Anschluss, beispielsweise als USB-Anschluss, oder als leitungsfreier Anschluss, beispielsweise als Bluetooth-Schnittstelle, ausgebildet sein.

Vorzugsweise sind die Anschlüsse für die externe Sensorik als Einzelanschlüsse ausgebildet. Beispielsweise können die Anschlüsse als Schraubklemmen, als Federzugklemmen oder als Schneidklemmen ausgebildet sein. Eine Ausbildung der Anschlüsse als Einzelanschlüsse steht insbesondere im Gegensatz zu einer Ausbildung der Anschlüsse als vorkonfektionierte mehrpolige Steckverbindung.

Die interne Sensorik, der Prozessor, der Programmspeicher, der Kanal zu dem Feldbus und der weitere Kanal sind in der Regel auf einer Hauptplatine angeordnet. Es ist möglich, dass die Anschlüsse auf einer Zusatzplatine angeordnet sind und dass die Zusatzplatine über eine mehrpolige Steckverbindung auf die Hauptplatine aufgesteckt ist. Durch diese Ausgestaltung kann insbesondere die Art der Anschlüsse durch Auswahl einer entsprechend ausgebildeten Zusatzplatine nach Bedarf variiert werden.

Der Kanal zu dem Feldbus kann leitungsgebunden sein. In diesem Fall kann der Kanal zu dem Feldbus beispielsweise mit ETHERNET-Physik arbeiten. Alternativ kann der Kanal zu dem Feldbus leitungslos arbeiten. In diesem Fall kann der Kanal zu dem Feldbus beispielsweise auf WLAN-Basis, auf Bluetooth-Basis oder auf Mobilfunk-Basis (GSM, UTMS und dergleichen) arbeiten. Analoge Ausgestaltungen sind bezüglich des weiteren Kanals möglich, wobei die Ausgestaltung des weiteren Kanals unabhängig von der Ausgestaltung des Kanals zu dem Feldbus ist.

Der Prozessor ist vorzugsweise als Universalprozessor (general purpose prozessor) ausgebildet. Er kann in einer Hochsprache wie beispielsweise Fortran oder C++ programmiert sein. Dadurch kann insbesondere die Auswertung sehr flexibel gestaltet werden, beispielsweise als Filterung, als FFT, als Mittelwertbildung, als Grenzwertüberwachung und dergleichen mehr. Die Auswertung durch den Prozessor des Feldgeräts kann nach Bedarf in Echtzeit oder entkoppelt vom Echtzeitkontext der Steuerung erfolgen. Weiterhin ist die Auswertung völlig unabhängig von der Steuerung des technischen Prozesses durch das den technischen Prozess steuernde Automatisierungsgerät.

Das Protokoll, mittels dessen der Prozessor das Auswertungsergebnis über den weiteren Kanal übermittelt, kann nach Bedarf bestimmt sein. Insbesondere kann der Prozessor ein anderes Protokoll verwenden als dasjenige Protokoll, zu dem der Prozessor über den Kanal zu dem Feldbus Signale entgegennimmt.

Wenn der Kanal zu dem Feldbus als vorkonfektionierter Anschluss für ein Buskabel ausgebildet ist, ist es insbesondere möglich, dass eine Energieversorgung des Feldgeräts über das Buskabel erfolgt.

Prinzipiell ist es möglich, über den weiteren Kanal Sollwerte für den gesteuerten Prozess an das Feldgerät zu übermitteln. In diesem Fall gibt der Prozessor des Feldgeräts die Sollwerte über den Feldbus aus. Die über den Feldbus ausgegebenen Sollwerte werden von einem Controller für den Prozess entgegengenommen und verwertet. Vorzugsweise gibt der Prozessor über den Kanal zum Feldbus jedoch keine Signale an den Feldbus aus. Dies gilt vorzugsweise unabhängig davon, ob der Prozessor über den Kanal zum Feldbus überhaupt Signale entgegennimmt oder nicht. Die Möglichkeit, dass der Prozessor über den Kanal zum Feldbus keine Signale entgegennimmt, besteht insbesondere deshalb, weil es möglich ist, dass der Prozessor ausschließlich von der internen Sensorik und/oder über die Anschlüsse von der externen Sensorik Signale entgegennimmt.

Wie bereits erwähnt, ist es prinzipiell möglich, das Feldgerät über eine vorkonfektionierte Schnittstelle wie beispielsweise einen USB-Anschluss oder einen drahtlosen Zugang (beispielsweise über eine Bluetooth-Schnittstelle) zu programmieren. Alternativ oder zusätzlich kann es möglich sein, das Feldgerät über den weiteren Kanal zu programmieren. Vorzugsweise übermittelt der Prozessor über den weiteren Kanal jedoch ausschließlich das Auswertungsergebnis an die übergeordnete Einrichtung, nimmt hingegen nicht über den weiteren Kanal von der übergeordneten Einrichtung Daten entgegen. Insbesondere ist es dadurch nicht möglich, über den weiteren Kanal das Verhalten des Feldgeräts zu beeinflussen. Dies kann aus Gründen der Betriebssicherheit des Feldgeräts und auch aus Gründen der Betriebssicherheit des technischen Prozesses, der mittels des Feldgeräts überwacht wird, von Vorteil sein.

Vorzugsweise ist das Feldgerät (mehr oder minder) echtzeitfähig. Insbesondere ist es möglich, dass der Prozessor binnen einer vorbestimmten Reaktionszeit nach dem Entgegennehmen der Signale von der internen Sensorik und/oder von der externen Sensorik und/oder über den Kanal zu dem Feldbus das Auswertungsergebnis ermittelt. Falls der Prozessor das Auswertungsergebnis stets über den weiteren Kanal an die übergeordnete Einrichtung übermittelt, erfolgt binnen der vorbestimmten Reaktionszeit auch die Übermittlung des Auswertungsergebnisses über den weiteren Kanal an die übergeordnete Einrichtung. Falls der Prozessor anhand des Auswertungsergebnisses entscheidet, ob eine Übermittlung des Auswertungsergebnisses an die übergeordnete Einrichtung erforderlich ist, und das Auswertungsergebnis nur in diesem Fall an die übergeordnete Einrichtung übermittelt, erfolgt binnen der vorbestimmten Reaktionszeit auch diese Entscheidung und - soweit erforderlich - die Übermittlung des Auswertungsergebnisses über den weiteren Kanal an die übergeordnete Einrichtung. Die Reaktionszeit kann nach Bedarf bestimmt sein. Sie kann im Einzelfall mit einer Taktzeit übereinstimmen, mit welcher der überwachte technische Prozess gesteuert wird. In der Regel wird die Reaktionszeit jedoch größer als eine derartige Taktzeit sein. Die Reaktionszeit kann beispielsweise im Bereich einiger, weniger Sekunden oder Minuten liegen.

Vorzugsweise ist das Feldgerät in hinreichendem Umfang gegenüber unerwünschten Umwelteinflüssen geschützt. Vorzugsweise weist das Feldgerät daher ein Gehäuse auf, mittels dessen zumindest die interne Sensorik, der Prozessor und der Programmspeicher gekapselt sind. Die Kapselung kann beispielsweise der Schutzart IP 20, IP 44, IP 54 oder IP 65 genügen. Auch eine noch höhere Schutzart kann in Einzelfällen sinnvoll sein. Je nach Schutzart kann es weiterhin sinnvoll sein, auch die Anschlüsse für die externe Sensorik, eine Energieversorgung und - sofern leitungsgebunden - Anschlüsse für ein Anschlusskabel für den Kanal zum Feldbus und/oder den weiteren Kanal und gegebenenfalls auch weitere Anschlüsse innerhalb des Gehäuses anzuordnen.

Vorzugsweise sind zumindest der Prozessor, der Programmspeicher und die Kanäle auf einer einzigen Platine oder auf einem einzigen Chip angeordnet sind. Das Feldgerät ist also vorzugsweise als SBC (Single Board Computer) oder als SoC (System on Chip) ausgebildet. Single Board Computer und System on Chip sind Fachleuten allgemein bekannt und vertraut.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Automatisierungssystem mit einem erfindungsgemäßen Feldgerät,
- FIG 2: ein Blockschaltbild eines erfindungsgemäßen Feldgeräts,
- FIG 3: eine interne Sensorik,
- FIG 4: Anschlüsse für eine externe Sensorik,
- FIG 5: ein Ablaufdiagramm,
- FIG 6: perspektivisch zwei Platinen und
- FIG 7: ein zugehöriges Blockschaltbild.

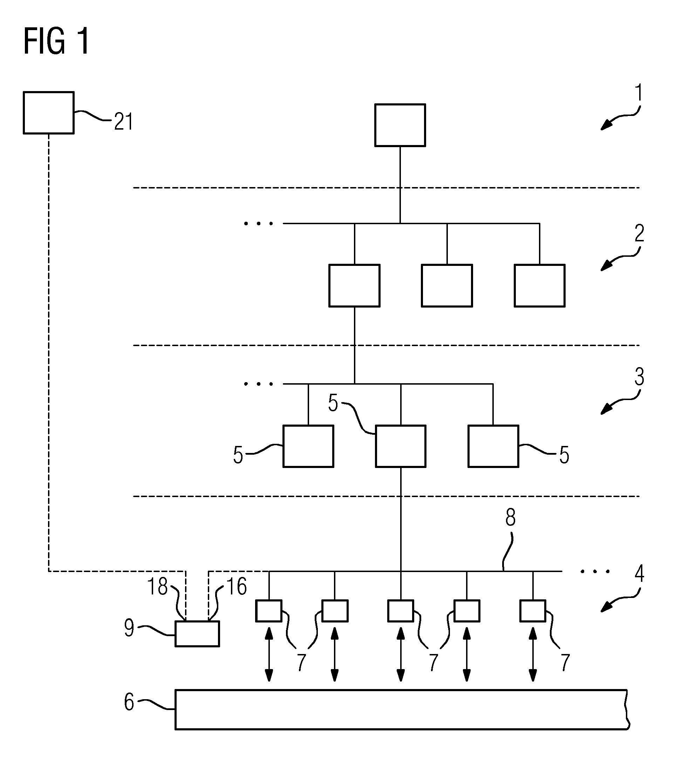

Gemäß FIG 1 weist ein Automatisierungssystem mehrere Ebenen auf. Insbesondere weist das Automatisierungssystem eine Verwaltungsebene 1, eine Leitebene 2, eine Automatisierungsebene 3 und eine Feldebene 4 auf. Im Rahmen der vorliegenden Erfindung kommt es auf die Feldebene 4 und teilweise noch auf die Automatisierungsebene 3 an.

In der Automatisierungsebene 3 sind Automatisierungsgeräte 5 angeordnet. Das jeweilige Automatisierungsgerät 5 nimmt von einem gesteuerten technischen Prozess 6 Eingangssignale entgegen und ermittelt anhand der Eingangssignale in Verbindung mit internen Zuständen des jeweiligen Automatisierungsgeräts 5 Steuersignale für den gesteuerten technischen Prozess 6. Die Steuersignale gibt das Automatisierungsgerät 5 an den gesteuerten technischen Prozess 6 aus. Das Entgegennehmen der Eingangssignale und/oder das Ausgeben der Steuersignale kann zumindest teilweise mittels Feldgeräten 7 erfolgen, die an den gesteuerten technischen Prozess 6 angekoppelt sind und mit dem jeweiligen Automatisierungsgerät 5 über einen Feldbus 8 kommunizieren. Der Feldbus 8 ist üblicherweise als serieller Bus ausgebildet, beispielsweise als PROFIBUS oder als CAN-Bus.

Die bisher erläuterten Feldgeräte 7 sind normale, konventionelle Feldgeräte, wie sie auch im Stand der Technik verwendet werden. Auf diese Feldgeräte 7 beziehen sich die nachstehenden Ausführungen nur dann, wenn hierauf ausdrücklich hingewiesen wird. Unabhängig davon, ob die Feldgeräte 7 vorhanden sind oder nicht, ist jedoch ein erfindungsgemäßes Feldgerät 9 der Automatisierungstechnik vorhanden. Dieses Feldgerät 9 wird nachstehend näher erläutert.

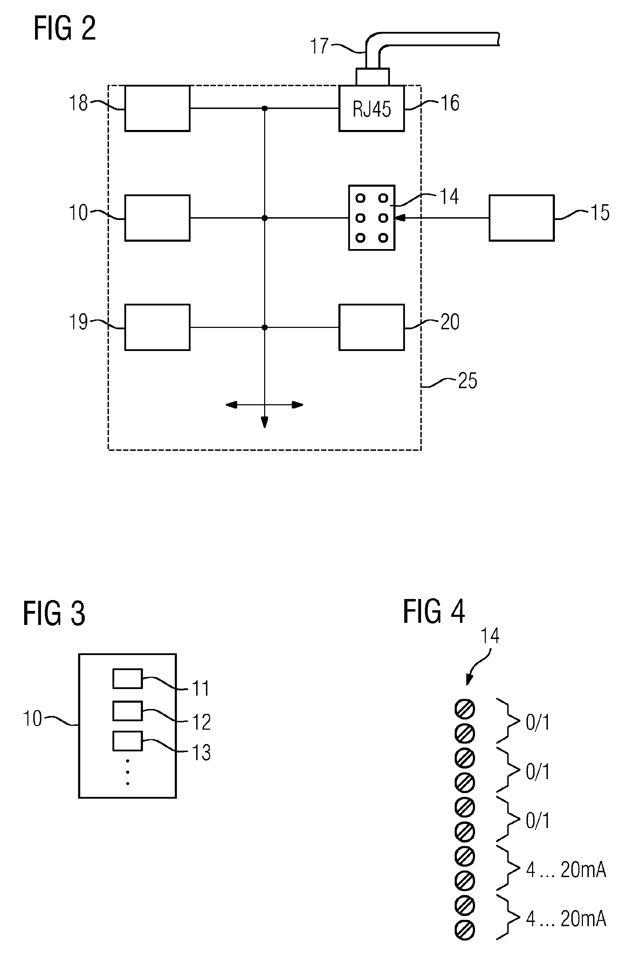

Gemäß FIG 2 umfasst das erfindungsgemäße Feldgerät 9 eine interne Sensorik 10. Mittels der internen Sensorik 10 werden Zustände erfasst, denen das Feldgerät 9 als Ganzes unterworfen ist. Beispielsweise kann die interne Sensorik 10 entsprechend der Darstellung in FIG 3 einen Beschleunigungssensor 11, einen Temperatursensor 12 und/oder einen Positionssensor 13 umfassen. Weiterhin können weitere Sensoren vorhanden sein, beispielsweise ein Schwingungssensor. Der Positionssensor 13 kann beispielsweise als GPS-Modul oder dergleichen ausgebildet sein.

Gemäß FIG 2 umfasst das Feldgerät 9 weiterhin Anschlüsse 14. Über die Anschlüsse 14 können dem Feldgerät 9 von einer externen Sensorik 15 Sensorsignale zugeführt werden. Die Anschlüsse 14 können als Anschlüsse für Binärsignale ausgebildet sein. Die Binärsignale können beispielsweise auf TTL-Logik oder auf einer anderen Logik, beispielsweise ECL oder IIL, basieren. Alternativ können die Anschlüsse 14 als Anschlüsse für Analogsignale ausgebildet sind. Die Analogsignale können beispielsweise als 4-20 mA-Signale ausgebildet sein. Auch Mischformen sind möglich. Beispielsweise sind in der Darstellung von FIG 4 die oberen Anschlüsse als Anschlüsse für Binärsignale und die unteren Anschlüsse für Analogsignale ausgebildet.

Gemäß FIG 1 weist das Feldgerät 9 weiterhin einen Kanal 16 zu dem Feldbus 8 auf. Der Kanal 16 zu dem Feldbus 8 kann beispielsweise mit ETHERNET-Physik oder auf WLAN-Basis oder auf Mobilfunk-Basis arbeiten. Wenn der Kanal 16 leitungsgebunden arbeitet, kann der Kanal 16 beispielsweise entsprechend der Darstellung in FIG 2 mittels eines entsprechenden Anschlusses für ein vorkonfektioniertes Buskabel 17 realisiert sein. Dies ist in FIG 2 - rein beispielhaft - durch die zusätzliche Bezeichnung des Kanals 16 mit dem üblichen Kürzel RJ45 angedeutet. Im Falle einer leitungsgebundenen Realisierung, insbesondere wenn der Kanal 16 zu dem Feldbus 8 als vorkonfektionierter Anschluss für das Buskabel 17 ausgebildet ist, kann weiterhin eine Energieversorgung des Feldgeräts 9 über das Buskabel 17 erfolgen.

Gemäß FIG 2 weist das Feldgerät 9 weiterhin einen weiteren Kanal 18 auf. Bei dem weiteren Kanal 18 handelt es sich um einen von dem Kanal 16 zum Feldbus 8 verschiedenen Kanal 18. Die obenstehenden Ausführungen zur Ausgestaltung des Kanals 16 sind in analoger Weise auch für die Ausgestaltung des Kanals 18 gültig. Die Ausgestaltung des Kanals 18 kann nach Bedarf gleich der Ausgestaltung des Kanals 16 oder verschieden von der Ausgestaltung des Kanals 16 sein.

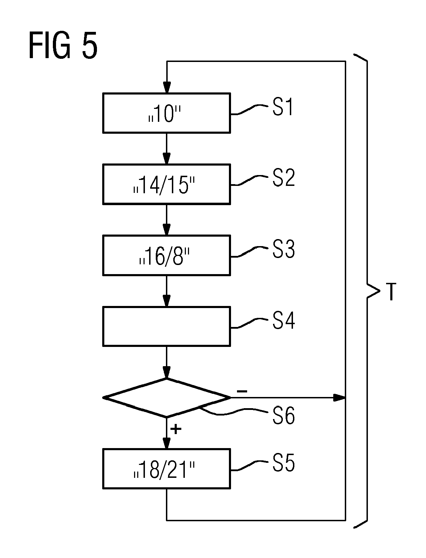

Schließlich weist das Feldgerät 9 einen Prozessor 19 auf. Der Prozessor 19 arbeitet ein Programm ab, dass in einem Programmspeicher 20 des Feldgeräts 9 hinterlegt ist. Das Programm legt die Wirkungsweise des Feldgeräts 9 fest. Insbesondere legt das Programm fest, ob und von welchen der Komponenten interne Sensorik 10, Anschlüsse 14 zur externen Sensorik 15 und Kanal 16 zum Feldbus 8 der Prozessor 19 Signale entgegennimmt und wie der Prozessor 19 diese Signale verarbeitet und auswertet. Es ist möglich, dass der Prozessor 9 von allen drei Komponenten 10, 14 und 16 Signale entgegennimmt. Von mindestens einer der drei Komponenten 10, 14 und 16 nimmt der Prozessor 19 jedoch Signale entgegen. Dies wird nachstehend in Verbindung mit FIG 5 näher erläutert.

Gemäß FIG 5 nimmt der Prozessor 19 in einem Schritt S1 von der internen Sensorik 10 deren Sensorsignale entgegen. Diese Sensorsignale sind - selbstverständlich - auf diejenigen Sensorsignale beschränkt, die von der internen Sensorik 10 zur Verfügung gestellt werden können.

Weiterhin nimmt der Prozessor 19 in einem Schritt S2 über die Anschlüsse 14 von der externen Sensorik 15 deren Sensorsignale entgegen. Diese Signale können nach Bedarf bestimmt sein, da die Auslegung der externen Sensorik 15 durch das Feldgerät 9 nur insoweit beschränkt wird, dass die von der externen Sensorik 15 ausgegebenen Sensorsignale mit den über die Anschlüsse 14 übertragbaren Signalen kompatibel sein müssen, also beispielsweise ein Analogsignal im Bereich zwischen 4 mA und 20 mA sein müssen. Für welche physikalische Größe oder für welchen Sachverhalt das jeweilige von der externen Sensorik 15 ausgegebene Sensorsignal charakteristisch ist, ist hierdurch jedoch nicht beschränkt. Es kann sich beispielsweise um eine Drehzahl, eine Temperatur, eine Position, einen Druck usw. handeln. Auch kann es sich um eine für eine mechanische Schwingung charakteristische Größe handeln, beispielsweise deren Amplitude, Frequenz oder Richtung. Weiterhin nimmt der Prozessor 19 in einem Schritt S3 über den Kanal 16 zu dem Feldbus 8 über den Feldbus 8 übermittelte Signale entgegen. Bei diesen Signalen kann es sich beispielsweise um Eingangssignale handeln, die von einem der anderen, konventionellen Feldgeräte 7 an das jeweilige Automatisierungsgerät 5 übermittelt werden. Alternativ oder zusätzlich kann es sich um Steuersignale handeln, die von dem jeweiligen Automatisierungsgerät 5 an eines der anderen, konventionellen Feldgeräte 7 übermittelt werden.

Der Prozessor 19 führt die Schritte S1 bis S3 aufgrund der Abarbeitung des im Programmspeicher 20 hinterlegten Programms aus. Entsprechend dem Programm ist es möglich, dass alle der Schritte S1 bis S3 vorhanden sind, nur zwei der Schritte S1 bis S3 vorhanden sind oder nur einer der Schritte S1 bis S3 vorhanden ist. Mindestens einer der Schritte S1 bis S3 ist jedoch vorhanden.

In einem Schritt S4 ermittelt der Prozessor 19 aufgrund der Abarbeitung des im Programmspeicher 20 hinterlegten Programms anhand der entgegengenommenen Signale ein Auswertungsergebnis. Beispielsweise kann der Prozessor 19 - je nach Programmierung durch das Programm - bezüglich von der internen Sensorik 10 und/oder der externen Sensorik 15 übermittelten Sensorsignale eine Mittelwertbildung, eine Trendanalyse, eine Grenzwertüberwachung, eine einfache oder komplexe Transformationen wie beispielsweise für eine Fourieranalyse erforderlich und andere Auswertungen vornehmen. Auch Kombinationen dieser Maßnahmen sind möglich. Auch kann der Prozessor 19 - wie zuvor je nach Programmierung durch das Programm - bezüglich der über den Feldbus 8 übermittelten Signale eine Filterung bezüglich bestimmter Signale vornehmen. Beispielsweise kann der Prozessor 19 ausschließlich diejenigen Signale herausfiltern, die von einem bestimmten der anderen, konventionellen Feldgeräte 7 an das jeweilige Automatisierungsgerät 5 übermittelt werden. Aufbauend auf der Filterung kann - nicht aber muss - beispielsweise analog zu den Sensorsignalen eine Mittelwertbildung, eine Trendanalyse, eine Grenzwertüberwachung, eine Fouriertransformation oder eine andere Verarbeitung und Auswertung erfolgen.

In einem Schritt S5 übermittelt der Prozessor 19 das Auswertungsergebnis über den weiteren Kanal 18 an eine übergeordnete Einrichtung 21 (siehe FIG 1). Die übergeordnete Einrichtung 21 ist in der Regel nicht in die unmittelbare, echtzeitkritische Steuerung und Kontrolle des technischen Prozesses 6 eingebunden. Dies ist zwar nicht ausgeschlossen. Im Regelfall erfolgt jedoch lediglich eine Überwachung des technischen Prozesses 6.

Soweit bisher erläutert, übermittelt der Prozessor 19 das Auswertungsergebnis stets an die übergeordnete Einrichtung 21. Es ist entsprechend der Darstellung in FIG 5 jedoch möglich, dass dem Schritt S5 ein Schritt S6 vorgeordnet ist. Wenn der Schritt S6 vorhanden ist, entscheidet der Prozessor 19 im Schritt S6, ob eine Übermittlung des Auswertungsergebnisses an die übergeordnete Einrichtung 21 erforderlich ist. In diesem Fall wird der Schritt S5 nur dann ausgeführt, wenn eine Übermittlung des Auswertungsergebnisses an die übergeordnete Einrichtung 21 erforderlich ist. Im Falle einer Grenzwertüberwachung kann beispielsweise eine Übermittlung auf Fälle beschränkt werden, in denen ein vorgegebener Grenzwert überschritten wird. Im Falle einer Filterung auf bestimmte, über den Feldbus 8 übermittelte Signale kann eine Übermittlung des Auswertungsergebnisses auf diejenigen Fälle beschränkt werden, in denen die Filterung ergeben hat, dass über den Feldbus 8 ein derartiges Signal übermittelt wurde. Zusätzlich kann unter Umständen auch unabhängig von dem konkreten Auswertungsergebnis von Zeit zu Zeit - beispielsweise jede Minute oder jede Stunde - von dem Prozessor 19 ein Lebenszeichen über den weiteren Kanal 18 an die übergeordnete Einrichtung 21 übermittelt werden. Zu diesem Zweck kann das Feldgerät 9 intern eine Uhr aufweisen (in den FIG nicht dargestellt).

Vorzugsweise wird die Abfolge der Schritte S1 bis S5 - gegebenenfalls einschließlich des Schrittes S6 - mit einer Zykluszeit T wiederholt ausgeführt. Wenn der Schritt S6 nicht vorhanden ist, ist durch diesen Sachverhalt gewährleistet, dass der Prozessor 19 das Auswertungsergebnis binnen einer vorbestimmten Reaktionszeit nach dem Entgegennehmen der Signale von der internen Sensorik 10 und/oder von der externen Sensorik 15 und/oder über den Kanal 16 zu dem Feldbus 8 ermittelt und über den weiteren Kanal 18 an die übergeordnete Einrichtung 21 übermittelt. Wenn der Schritt S6 vorhanden ist, ist durch diesen Sachverhalt gewährleistet, dass der Prozessor 19 das Auswertungsergebnis binnen einer vorbestimmten Reaktionszeit nach dem Entgegennehmen der Signale von der internen Sensorik 10 und/oder von der externen Sensorik 15 und/oder über den Kanal 16 zu dem Feldbus 8 ermittelt, anhand des Auswertungsergebnisses entscheidet, ob die Übermittlung des Auswertungsergebnisses an die übergeordnete Einrichtung 21 erforderlich ist, und das Auswertungsergebnis in diesem Fall über den weiteren Kanal 18 an die übergeordnete Einrichtung 21 übermittelt.

Weiterhin können zusätzlich zu den Schritten S1 bis S5 weitere in den FIG nicht dargestellte Schritte vorhanden sein. Beispielsweise ist es möglich, dass der Prozessor 19 über den Kanal 16 zum Feldbus 8 Signale an den Feldbus 8 ausgibt. Beispielsweise können - insbesondere nach einer entsprechenden Vorgabe über den weiteren Kanal 18 - neue Sollwerte oder Änderungen am Programm des Automatisierungsgeräts 5 an den Feldbus 8 ausgegeben werden. Vorzugsweise erfolgt jedoch keine derartige Ausgabe an Signalen an den Feldbus 8. Soweit es den Feldbus 8 bzw. den technischen Prozess 6 betrifft, ist das Feldgerät 9 also vorzugsweise ausschließlich ein Zuhörer, der den Datenverkehr auf dem Feldbus 8 mithört. Durch diese Ausgestaltung ist insbesondere ausgeschlossen, dass von außen auf unerwünschte Weise - Stichwort Hackerangriff - in die Steuerung des technischen Prozesses 6 eingegriffen wird.

In analoger Weise ist es möglich, dass der Prozessor 19 über den weiteren Kanal 18 von der übergeordneten Einrichtung 21 Daten entgegennimmt. Beispielsweise kann eine Fernprogrammierung erfolgen, dass also das im Programmspeicher 20 hinterlegte Programm geändert wird. Auch können - siehe die obigen Ausführungen - Sollwerte und dergleichen für das Automatisierungsgerät 5 an das Feldgerät 9 übertragen werden. Vorzugsweise übermittelt der Prozessor 19 über den weiteren Kanal 18 jedoch ausschließlich das Auswertungsergebnis an die übergeordnete Einrichtung 21. Hingegen nimmt der Prozessor 19 über den weiteren Kanal nicht von der übergeordneten Einrichtung 21 Daten entgegen. Soweit es den weiteren Kanal 18 betrifft, ist das Feldgerät 9 also vorzugsweise ausschließlich ein Sender, der Daten über den weiteren Kanal 18 ausgibt, nicht aber empfängt. Auch durch diese Ausgestaltung ist insbesondere ausgeschlossen, dass von außen auf unerwünschte Weise in die Steuerung des technischen Prozesses 6 eingegriffen wird. Falls der Prozessor 19 ausnahmsweise dennoch Daten für den technischen Prozess 6 entgegennimmt, übermittelt der Prozessor 19 diese Daten über den Kanal 16 zum Feldbus 8 jedoch vorzugsweise stets an das Automatisierungsgerät 5, nicht jedoch direkt an eines der anderen, konventionellen Feldgeräte 7.

Der Datenverkehr auf dem Feldbus 8 erfolgt gemäß einem vorbestimmten Protokoll, beispielsweise dem PROFIBUS-Protokoll. Demzufolge nimmt der Prozessor 19 die über den Feldbus 8 übermittelten Signale auch in diesem Protokoll entgegen. Auch die Übermittlung des Auswertungsergebnisses über den weiteren Kanal 18 an die übergeordnete Einrichtung 21 erfolgt in einem Protokoll. Dieses Protokoll kann jedoch ein anderes Protokoll sein als das Protokoll des Feldbusses 8. In der Regel ist dies auch der Fall. Zwingend ist dies jedoch nicht erforderlich.

Die Anschlüsse 14 für die externe Sensorik 15 können nach Bedarf ausgebildet sein. Insbesondere können die Anschlüsse 14 entsprechend der schematischen Darstellung in FIG 4 beispielsweise als Schraubklemmen ausgebildet sein. Auch andere Ausgestaltungen als Einzelanschlüsse sind jedoch möglich, beispielsweise als Käfigzugfedern, als (einzelne) Steckverbindungen und dergleichen mehr.

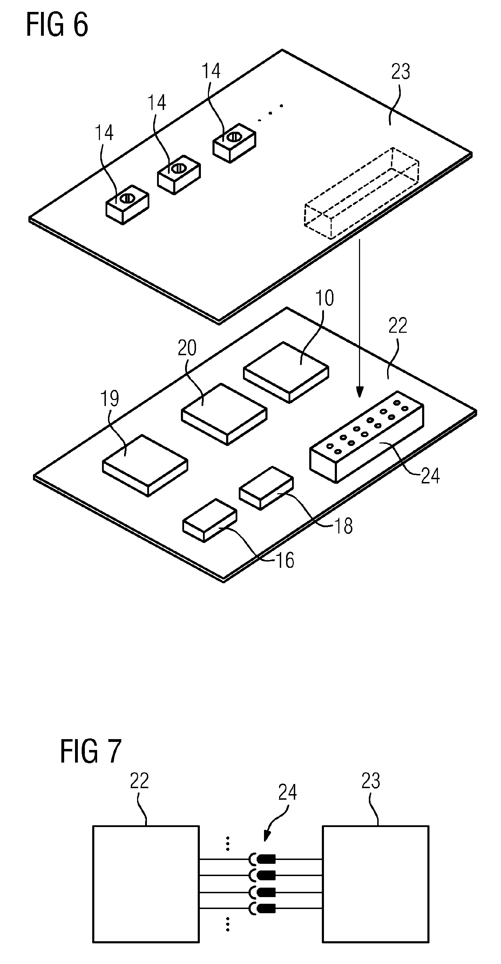

Die interne Sensorik 10, der Prozessor 19, der Programmspeicher 20, der Kanal 16 zu dem Feldbus 8 und der weitere Kanal 18 sind entsprechend der Darstellung in FIG 6 vorzugsweise auf einer einzigen Platine 22 (Hauptplatine 22) angeordnet (SBC = Single Board Computer). Sie können sogar innerhalb der Hauptplatine 22 auf einem einzigen Chip angeordnet sein (SoC = System on Chip). Eine besonders flexible Ausgestaltung des Feldgeräts 9 ergibt sich dadurch, dass die Anschlüsse 14 zur externen Sensorik 15 nicht auf der Hauptplatine 22, sondern auf einer Zusatzplatine 23 angeordnet sind. In diesem Fall kann die Zusatzplatine 23 entsprechend der Darstellung der FIG 6 und 7 über eine mehrpolige Steckverbindung 24 auf die Hauptplatine 22 aufgesteckt sein. Durch Wechseln der Zusatzplatine 23 kann dadurch ohne weitergehende Modifikation des Feldgeräts 9 die Wahl der Anschlüsse 14 nach Bedarf variiert werden.

Nach dem Einspeichern des Programms in den Programmspeicher 20 sind bezüglich des Feldgeräts 9 keinerlei direkte Eingaben durch einen Menschen mehr erforderlich. Es ist daher möglich und sogar bevorzugt, dass das Feldgerät 9 kein Bedienfeld aufweist. Ein Bedienfeld ist aus diesem Grund in FIG 2 nicht mit dargestellt. Aus Gründen der Flexibilität bei der Bestimmung der vom Feldgerät 9 auszuführenden Aufgaben ist es weiterhin von Vorteil, wenn der Prozessor 19 als Universalprozessor (general purpose processor) ausgebildet ist. Derartige Prozessoren sind allgemein bekannt, beispielsweise der Prozessoren der Serien ARM 11 oder ARM CORTEX und dergleichen mehr.

Entsprechend der Darstellung in FIG 2 weist das Feldgerät 9 ein Gehäuse 25 auf. Mittels des Gehäuses 25 sind zumindest die interne Sensorik 10, der Prozessor 19 und der Programmspeicher 20 gekapselt. Soweit erforderlich, können auch die Anschlüsse 14 für die externe Sensorik 15 innerhalb des Gehäuses 25 angeordnet sein. Sofern der Kanal 16 zum Feldbus 8 und/oder der Kanal 18 zu übergeordneten Einrichtung 21 leitungsgebunden realisiert sind, können gegebenenfalls auch die Anschlüsse für die entsprechenden Buskabel 17 innerhalb des Gehäuses 25 angeordnet sein. Das Feldgerät 9 kann eine autarke Energieversorgung aufweisen, beispielsweise eine Batterie oder einen Akkumulator, gegebenenfalls unterstützt durch eine Solarzelle oder dergleichen. Alternativ kann ein Anschluss für eine Energieversorgung vorhanden sein. Auch dieser Anschluss kann gegebenenfalls innerhalb des Gehäuses 25 angeordnet sein. Die Kapselung kann beispielsweise der Schutzart IP 20, IP 44, IP 54, IP 65 genügen. Auch eine noch höhere Schutzart kann in Einzelfällen sinnvoll sein. Mittels des Gehäuses 25 oder einer Befestigung des Gehäuses 25 kann unter Umständen auch ein Schutz gegen Hitze und/oder Schwingungen oder andere Umwelteinflüsse wie beispielsweise chemische aggressive Substanzen oder Radioaktivität (insbesondere Alpha- und Beta-Strahlung) realisiert werden. Soweit erforderlich, kann das Gehäuse 25 Durchführungen für Leitungen und Kabel aufweisen. Das Gehäuse 25 kann die - relativ geringe - Größe von beispielsweise 10 cm x 10 cm x 5 cm oder auch weniger aufweisen.

Zusammengefasst betrifft die vorliegende Erfindung somit folgenden Sachverhalt:

Ein Feldgerät 9 der Automatisierungstechnik umfasst eine interne Sensorik 10, mittels derer Zustände erfasst werden, denen das Feldgerät 9 als Ganzes unterworfen ist. Es weist weiterhin Anschlüsse 14 auf, über die dem Feldgerät 9 von einer externen Sensorik 15 Sensorsignale zugeführt werden können. Weiterhin weist das Feldgerät 9 einen Kanal 16 zu einem seriellen Feldbus 8 und einen weiteren Kanal 18 auf. Das Feldgerät 9 weist einen Prozessor 19 auf, der ein in einem Programmspeicher 20 hinterlegtes Programm abarbeitet. Aufgrund der Abarbeitung des Programms nimmt der Prozessor 19 entsprechend dem Programm von der internen Sensorik 10 und/oder über die Anschlüsse 14 von der externen Sensorik 15 und/oder über den Kanal 16 zu dem Feldbus 8 über den Feldbus 8 übermittelte Signale entgegen. Er ermittelt anhand der entgegengenommenen Signale ein Auswertungsergebnis. Der Prozessor 19 übermittelt das Auswertungsergebnis über den weiteren Kanal 18 an eine übergeordnete Einrichtung 21. Soweit erforderlich, entscheidet der Prozessor 19 zuvor anhand des Auswertungsergebnisses, ob eine Übermittlung des Auswertungsergebnisses erforderlich ist.

Die vorliegende Erfindung weist viele Vorteile auf. Insbesondere ist auf einfache, kostengünstige und zuverlässige Weise eine Überwachung von technischen Prozessen 6 auf hohem Niveau erreichbar. Ein Eingriff in die echtzeitgebundene Steuerung des technischen Prozesses 6 ist nicht erforderlich. Zur Realisierung derartiger Überwachungen ist lediglich ein einheitliches Feldgerät 9 erforderlich, dass entsprechend programmiert und in der Nähe des zu überwachenden technischen Prozesses 6 angeordnet werden muss. Gegebenenfalls muss weiterhin die entsprechende externe Sensorik 15 bereitgestellt werden. Weitere Maßnahmen sind jedoch nicht erforderlich. Aufgrund des weiteren Kanals 18 kann (unter Umgehung des entsprechenden Automatisierungsgeräts 5) eine direkte Übermittlung des Auswertungsergebnisses an die übergeordnete Einrichtung 21 erfolgen. Das erfindungsgemäße Feldgerät 9 weist weiterhin eine sehr geringe Komplexität bei gleichzeitig universeller Anwendbarkeit auf, so dass es kostengünstig hergestellt und in einer Vielzahl von Anwendungsfällen eingesetzt werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Feldgerät der Automatisierungstechnik,
- wobei das Feldgerät eine interne Sensorik (10) umfasst, mittels derer Zustände erfasst werden, denen das Feldgerät als Ganzes unterworfen ist,
- wobei das Feldgerät Anschlüsse (14) aufweist, über die dem Feldgerät von einer externen Sensorik (15) Sensorsignale zugeführt werden können,
- wobei das Feldgerät einen Kanal (16) zu einem seriellen Feldbus (8) und einen weiteren, von dem Kanal (16) zu dem seriellen Feldbus (8) verschiedenen Kanal (18) aufweist,
- wobei das Feldgerät einen Prozessor (19) aufweist,
- wobei der Prozessor (19) ein in einem Programmspeicher (20) hinterlegtes Programm abarbeitet,
- wobei der Prozessor (19) aufgrund der Abarbeitung des Programms entsprechend dem Programm
-- von der internen Sensorik (10) und/oder über die Anschlüsse (14) von der externen Sensorik (15) und/oder über den Kanal (16) zu dem Feldbus (8) über den Feldbus (8) übermittelte Signale entgegennimmt,
-- anhand der entgegengenommenen Signale ein Auswertungsergebnis ermittelt und
-- entweder das Auswertungsergebnis stets über den weiteren Kanal (18) an eine übergeordnete Einrichtung (21) übermittelt oder anhand des Auswertungsergebnisses entscheidet, ob eine Übermittlung des Auswertungsergebnisses an die übergeordnete Einrichtung (21) erforderlich ist, und das Auswertungsergebnis nur in diesem Fall an die übergeordnete Einrichtung (21) übermittelt.

2. Feldgerät nach Anspruch 1,
**dadurch gekennzeichnet,**
**dass** die interne Sensorik (10) einen Beschleunigungssensor (11), einen Schwingungssensor, einen Temperatursensor (12) und/oder einen Positionssensor (13) umfasst.

3. Feldgerät nach Anspruch 1 oder 2,
**dadurch gekennzeichnet,**
**dass** die Anschlüsse (14) als Anschlüsse für Binärsignale und/oder Analogsignale ausgebildet sind.

4. Feldgerät nach Anspruch 1, 2 oder 3,
**dadurch gekennzeichnet,**
**dass** das Feldgerät kein Bedienfeld aufweist.

5. Feldgerät nach einem der obigen Ansprüche,
**dadurch gekennzeichnet,**
**dass** die Anschlüsse (14) für die externe Sensorik (15) als Einzelanschlüsse ausgebildet sind.

6. Feldgerät nach einem der obigen Ansprüche,
**dadurch gekennzeichnet,**
**dass** die interne Sensorik (10), der Prozessor (19), der Programmspeicher (20), der Kanal (16) zu dem Feldbus (8) und der weitere Kanal (18) auf einer Hauptplatine (22) angeordnet sind, dass die Anschlüsse (14) auf einer Zusatzplatine (23) angeordnet sind und dass die Zusatzplatine (23) über eine mehrpolige Steckverbindung (24) auf die Hauptplatine (22) aufgesteckt ist.

7. Feldgerät nach einem der obigen Ansprüche,
**dadurch gekennzeichnet,**
**dass** der Kanal (16) zu dem Feldbus (8) und/oder der weitere Kanal (18) mit ETHERNET-Physik oder auf WLAN-Basis oder auf Mobilfunk-Basis arbeiten.

8. Feldgerät nach einem der obigen Ansprüche,
**dadurch gekennzeichnet,**
**dass** der Prozessor (19) als Universalprozessor ausgebildet ist.

9. Feldgerät nach einem der obigen Ansprüche,
**dadurch gekennzeichnet,**
**dass** der Prozessor (19) das Auswertungsergebnis über den weiteren Kanal (18) in einem anderen Protokoll übermittelt als er über den Kanal (16) zu dem Feldbus (8) Signale entgegennimmt.

10. Feldgerät nach einem der obigen Ansprüche,
**dadurch gekennzeichnet,**
**dass** der Kanal (16) zu dem Feldbus (8) als vorkonfektionierter Anschluss für ein Buskabel (17) ausgebildet ist und dass eine Energieversorgung des Feldgeräts über das Buskabel (17) erfolgt.

11. Feldgerät nach einem der obigen Ansprüche,
**dadurch gekennzeichnet,**
**dass** der Prozessor (19) über den Kanal (16) zum Feldbus (8) keine Signale an den Feldbus (8) ausgibt.

12. Feldgerät nach einem der obigen Ansprüche,
**dadurch gekennzeichnet,**
**dass** der Prozessor (19) über den weiteren Kanal (18) ausschließlich das Auswertungsergebnis an die übergeordnete Einrichtung (21) übermittelt, nicht aber über den weiteren Kanal (18) von der übergeordneten Einrichtung (21) Daten entgegennimmt.

13. Feldgerät nach einem der obigen Ansprüche,
**dadurch gekennzeichnet,**
**dass** der Prozessor (19) binnen einer vorbestimmten Reaktionszeit nach dem Entgegennehmen der Signale von der internen Sensorik (10) und/oder von der externen Sensorik (15) und/ oder über den Kanal (16) zu dem Feldbus (8) das Auswertungsergebnis ermittelt und entweder das Auswertungsergebnis über den weiteren Kanal (18) an die übergeordnete Einrichtung (21) übermittelt oder anhand des Auswertungsergebnisses entscheidet, ob die Übermittlung des Auswertungsergebnisses an die übergeordnete Einrichtung (21) erforderlich ist, und das Auswertungsergebnis in diesem Fall über den weiteren Kanal (18) an die übergeordnete Einrichtung (21) übermittelt.

14. Feldgerät nach einem der obigen Ansprüche,
**dadurch gekennzeichnet,**
**dass** das Feldgerät ein Gehäuse (25) aufweist, mittels dessen zumindest die interne Sensorik (10), der Prozessor (19) und der Programmspeicher (20) gekapselt sind.

15. Feldgerät nach einem der obigen Ansprüche,
**dadurch gekennzeichnet,**
**dass** zumindest der Prozessor (19), der Programmspeicher (20) und die Kanäle (16, 18) auf einer einzigen Platine (22) oder auf einem einzigen Chip angeordnet sind.
